(19) Europäisches Patentamt
European Patent Office
Office européen des brevets

(11) **EP 4 568 165 A1**

(12) **EUROPEAN PATENT APPLICATION**

(43) Date of publication:
**11.06.2025 Bulletin 2025/24**

(21) Application number: **24214830.2**

(22) Date of filing: **22.11.2024**

(51) International Patent Classification (IPC):
**H04L 9/00** (2022.01)

(52) Cooperative Patent Classification (CPC):
**H04L 9/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 KR 20230174888**

(71) Applicant: **Samsung Electronics Co., Ltd.**
**Suwon-si, Gyeonggi-do 16677 (KR)**

(72) Inventor: **MOON, Youngsik**
**Suwon-si, Gyeonggi-do 16677 (KR)**

(74) Representative: **Kuhnen & Wacker**
**Patent- und Rechtsanwaltsbüro PartG mbB**
**Prinz-Ludwig-Straße 40A**
**85354 Freising (DE)**

(54) **HOMOMORPHIC ENCRYPTION SYSTEM AND OPERATING METHOD THEREOF**

(57)     Provided is a homomorphic encryption device (100), including: an encryption circuit (110) configured to encrypt original data into a ciphertext by using a homomorphic encryption algorithm, and provide, to a homomorphic encryption operation device (200), the ciphertext based on which an input ciphertext is generated and, for a first conditional operation, a plurality of operations corresponding to a plurality of condition paths are performed on the input ciphertext, each of the plurality of condition paths including at least one operation condition; a decryption circuit (120) configured to receive, from the homomorphic encryption operation device (200), a plurality of first operation values generated from the plurality of operations, and decrypt the plurality of first operation values; and a post processor (130) configured to select one of the plurality of decrypted first operation values based on information (modi_info) about the input ciphertext and a plurality of operation conditions included in the plurality of condition paths.

FIG. 7

**Description**

BACKGROUND

One or more example embodiments of the disclosure relate to a homomorphic encryption system for performing homomorphic operations, and an operation method thereof, and more particularly to a homomorphic encryption device, a method of operating the homomorphic encryption device, a homomorphic encryption operation device, a method of operating the homomorphic encryption operation device, and a homomorphic encryption system and a method of operating the homomorphic encryption system.

In general, a homomorphic encryption performs an operation on a ciphertext without decrypting encrypted information and may obtain the same result as when an operation is performed on a plain text and a result of the operation is encrypted. Therefore, the homomorphic encryption receives much attention from companies that provide big data-based services because the homomorphic encryption allows for various operations such as statistical processing and machine learning to be performed without decrypting a ciphertext.

The technique closest to the current commercialization of the homomorphic encryption technology is a fully homomorphic encryption technology that overcomes the limitation of the number of operations in a levelled homomorphic encryption which could perform only a finite number of times of operations, by applying a bootstrap technology to the levelled homomorphic encryption. The biggest problem with the commercialization of homomorphic encryption technology is the size of a ciphertext, which increases by dozens of times compared to original data.

SUMMARY

One or more example embodiments of the inventive concept provide a homomorphic encryption system and an operating method thereof, the homomorphic encryption system calculating a plurality of operation values corresponding to a plurality of condition paths in a homomorphic operation corresponding to a transcendental function, decrypting the operation values, and then selecting one of the decrypted operation values on the basis of an operation condition.

According to an aspect of one or more example embodiments of the inventive concept, there is provided a homomorphic encryption device, including: an encryption circuit configured to encrypt original data into a ciphertext by using a homomorphic encryption algorithm, and provide, to a homomorphic encryption operation device, the ciphertext based on which an input ciphertext is generated and, for a first conditional operation, a plurality of operations corresponding to a plurality of condition paths are performed on the input ciphertext, each of the plurality of condition paths including at least one operation condition; a decryption circuit configured to receive, from the homomorphic encryption operation device, a plurality of first operation values generated from the plurality of operations, and decrypt the plurality of first operation values; and a post processor configured to receive, from the homomorphic encryption operation device, information about the input ciphertext and a plurality of operation conditions included in the plurality of condition paths, and select one of the plurality of decrypted first operation values based on the received information.

According to an aspect of one or more example embodiments of the inventive concept, there is provided a method of operating a homomorphic encryption device, the method including encrypting original data into a ciphertext by using a homomorphic encryption algorithm, and providing, to a homomorphic encryption operation device, the ciphertext based on which an input ciphertext is generated and for a first conditional operation, a plurality of operations corresponding to a plurality of condition paths are performed on the input ciphertext, each of the plurality of condition paths including at least one operation condition; receiving, from the homomorphic encryption operation device, a plurality of first operation values generated from the plurality of operations, and decrypting the plurality of first operation values; and receiving, from the homomorphic encryption operation device, information about the input ciphertext and a plurality of operation conditions included in the plurality of condition paths, and selecting one of the plurality of decrypted first operation values based on the received information.

According to an aspect of one or more example embodiments of the inventive concept, there is provided a solid state drive (SSD) system including a SSD configured to encrypt original data into a ciphertext by using a homomorphic encryption algorithm; and a host configured to generate an input ciphertext based on the ciphertext and configured to perform, for a first conditional operation, performing a plurality of operations corresponding to a plurality of operation conditions on the input ciphertext, to generate a plurality of first operation values for the input ciphertext, wherein the SSD is further configured to decrypt the plurality of first operation values and select one of the plurality of decrypted first operation values based on information on the input ciphertext and the plurality of operation conditions.

BRIEF DESCRIPTION OF DRAWINGS

Example embodiments of the inventive concept will be more clearly understood from the following detailed description taken in conjunction with the accompanying drawings in which:

FIG. 1 is a block diagram illustrating a homomorphic encryption system according to one or more example embodiments;

FIG. 2 is a block diagram illustrating a homomorphic encryption operation device according to one or more example embodiments;

FIG. 3 is a diagram illustrating an operation scenario according to one or more example embodiments;

FIG. 4 is a graph illustrating an ideal rectified linear unit (ReLU) function and an approximate ReLU function;

FIG. 5 is a diagram illustrating performance information of a homomorphic encryption device according to one or more example embodiments;

FIG. 6 is a block diagram illustrating a machine learning operation according to a comparative example;

FIG. 7 is a block diagram illustrating a machine learning operation according to one or more example embodiments;

FIGS. 8A to 8C are diagrams illustrating a modified decision tree operation according to one or more example embodiments;

FIG. 9 is a diagram illustrating a decision tree operation of a comparative example;

FIG. 10 is a diagram illustrating a modified ReLU operation according to one or more example embodiments;

FIG. 11 is a diagram illustrating a modified Max operation according to one or more example embodiments;

FIG. 12 is a flowchart diagram illustrating an operating method of a homomorphic encryption system according to one or more example embodiments; and

FIG. 13 is a block diagram illustrating a solid state drive (SSD) system according to one or more example embodiments.

DETAILED DESCRIPTION

Hereinafter, example embodiments will be described in detail with reference to the accompanying drawings.

An operation that may be performed in a ciphertext state in a homomorphic encryption includes an arithmetic operation for a polynomial. Therefore, a transcendental function, which is a function that cannot be defined as a root of a polynomial, such as a logical function, a code function, an indication function, a trigonometric function, etc., required in statistical processing and machine learning, may be approximated using a Taylor polynomial, a Chebyshev polynomial, and the like.

According to one or more example embodiments, resources consumed to approximate the transcendental function may be reduced by transforming the transcendental function into an operation capable of an arithmetic operation.

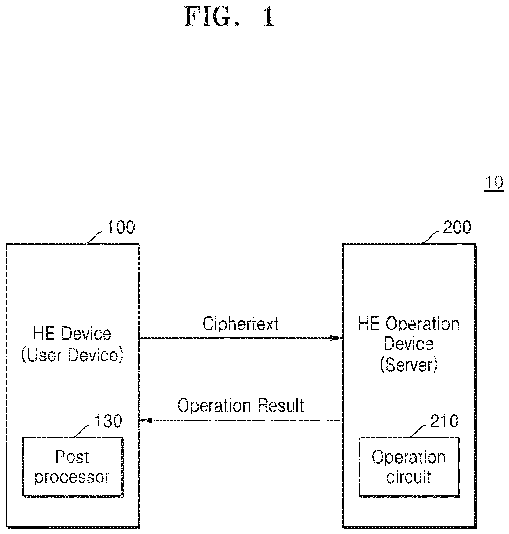

FIG. 1 is a block diagram illustrating a homomorphic encryption system according to one or more example embodiments.

Referring to FIG. 1, a homomorphic encryption system 10 may include a homomorphic encryption (HE) device 100 and a homomorphic encryption operation device 200.

The homomorphic encryption device 100 may be implemented to convert a plain text into a ciphertext and/or convert a ciphertext into a plain text using homomorphic encryption algorithms. The homomorphic encryption device 100 may include an encryption circuit for converting a plain text into a ciphertext and/or a decryption circuit for converting a ciphertext into a plain text. In one or more example embodiments, the homomorphic encryption device 100 may be a user device. For example, the user device may be one or more of various electronic devices. Here, the electronic device may include a storage device, a portable communication device (e.g., a smartphone), a computer device, a portable multimedia device, a portable medical device, a camera, a wearable device, or a home appliance.

For example, the electronic device to which the homomorphic encryption device 100 according to one or more example embodiments is applied may provide an intelligent service (e.g., a smart home, a smart city, a smart car, and/or healthcare) based on wireless communication technology and Internet of Things (IoT) related technology.

The homomorphic encryption operation device 200 may be implemented to perform an operation on a ciphertext transmitted from the homomorphic encryption device 100. In one or more example embodiments, the homomorphic encryption operation device 200 may include a server. For example, a server may provide a cloud service and/or provide a ultra-low latency service using distributed computing or mobile edge computing. In particular, the server may include an intelligent server using machine learning and/or a neural network.

In order to perform a transcendental function that cannot be defined as a polynomial root, such as a logical function, a code function, an indicator function, a trigonometric function, etc., an existing homomorphic encryption system performs a polynomial approximation (e.g., a Taylor polynomial approximation, a Chebischoff polynomial approximation, etc.) to discontinuities of the transcendental function. However, this polynomial approximation method causes an excessive operation complexity when applied to homomorphic encryption. In general, when an optimization approximation technique of the transcendental function is applied to the homomorphic encryption, the operation complexity is very high and realistic implementation is impossible.

The homomorphic encryption operation device 200 may include an operation circuit 210. The operation circuit 210 may perform a multiplication operation and an addition operation. The operation circuit 210 may perform an approximation operation corresponding to a transcendental function. The approximation operation may be performed by using a multiplication operation and an addition operation.

The operation circuit 210 according to one or more example embodiments may reduce the complexity of the homomorphic operation by modifying a conditional operation that generates an output value, by inputting an input value to a function that is selected according to at least one condition applied to the input value.

A conditional operation for a homomorphic operation is performed using a polynomial approximation, and since extensive multiplication and addition operations are required during an approximation operation, the complexity of the homomorphic operation may be high. That is, since data value is encrypted, it may be very difficult for the homomorphic encryption operation device 200 to determine whether a condition with respect to the data value is satisfied.

Accordingly, the calculation circuit 210 may not only determine whether a condition has been satisfied, and perform an operation corresponding to the satisfied condition, but may also generate a plurality of output values by performing operations for a plurality of conditions. That is, the operation circuit 210 may generate a plurality of output values by performing a plurality of operations corresponding to a plurality of conditions during a conditional operation (hereinafter, referred to as a non-trivial operation) corresponding to the transcendental function. The operation circuit 210 may provide a plurality of output values, or a plurality of subsequent operation values obtained using the plurality of output values as input values, to the homomorphic encryption device 100. Furthermore, the operation circuit 210 may provide information (hereinafter, referred to as modification information) on an input value (or input ciphertext) and a condition of the non-trivial operation to the homomorphic encryption device 100.

The homomorphic encryption device 100 may receive a plurality of output values or a plurality of subsequent operation values received from the homomorphic encryption operation device 200 and decrypt the plurality of output values or the plurality of subsequent operation values. A post processor 130 included in the homomorphic encryption device 100 may obtain an operation result, reflecting the non-trivial operation, by performing a selection operation for selecting one of the decrypted values based on the modification information.

In other words, The non-trivial operation may be divided into a first partial operation (e.g., a modified non-trivial operation) that is performed in an encryption state and a second partial operation (e.g., a selection operation) that is performed in a decrypted state, and the operation circuit 210 of the homomorphic encryption operation device 200 may perform the first partial operation and the post processor 130 of the homomorphic encryption device 100 may perform the second partial operation. The first partial operation may output an operation result of each of operations that are selected according to whether a corresponding condition of the non-trivial operation is satisfied. The first partial operation may include a multiplication operation and an addition operation. The non-trivial operation may include one or more of a decision tree operation including a compare operation, a Max operation, a Min operation, an activation operation, a rectified linear unit (ReLU) operation, a pooling operation, and the like. However, embodiments are not limited thereto.

Since the homomorphic encryption operation device 200 may have higher computing performance than the homomorphic encryption device 100, the homomorphic encryption operation device 200 may quickly perform the homomorphic operation even when the operation complexity of the homomorphic operation increases. However, as the operation complexity of the homomorphic operation increases, a length of a homomorphic ciphertext transmitted from the homomorphic encryption device 100 needs to be greater. Therefore, when the complexity of the operation performed by the homomorphic encryption operation device 200 increases excessively, there may be a situation in which the homomorphic ciphertext with a sufficient length may not be generated due to a resource limitation of the homomorphic encryption device 100.

In one or more embodiments, with respect to a plurality of non-trivial operations to be performed on the ciphertext, the operation circuit 210 may perform some of the plurality of non-trivial operations on the ciphertext as it is (that is, without modification), and perform a modified non-trivial operation for each of remaining non-trivial operations, according to the performance of the homomorphic encryption device 100.

According to one or more example embodiments, the homomorphic encryption operation device 200 may generate a plurality of output values by performing a modified non-trivial operation corresponding to individual conditions without determining whether each of the individual conditions of the non-trivial operation is satisfied. Furthermore, the homomorphic encryption operation apparatus 200 may generate modification information that includes information on an input value and conditions of the non-trivial operation. The homomorphic encryption device 100 may perform a selection operation for selecting one of the plurality of output values based on the modification information.

Accordingly, the complexity of the homomorphic operation performed by the homomorphic encryption operation device 200 may be lowered, and the complexity of the homomorphic encryption performed by the homomorphic encryption device 100 may be lowered.

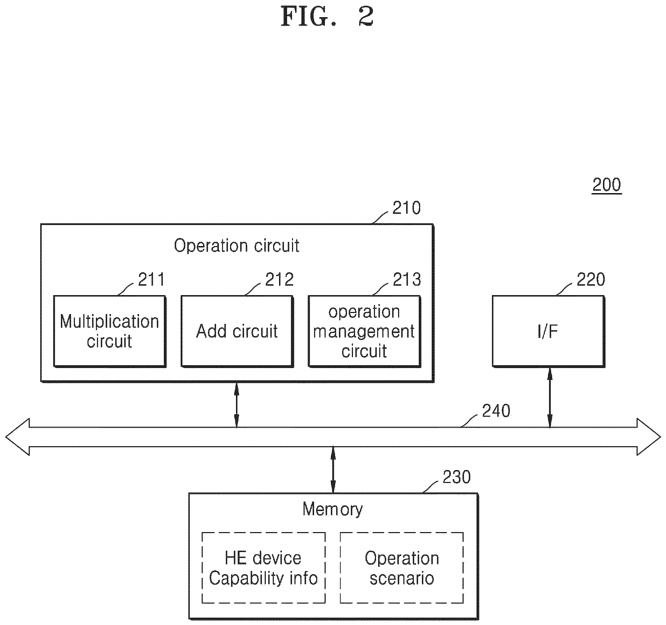

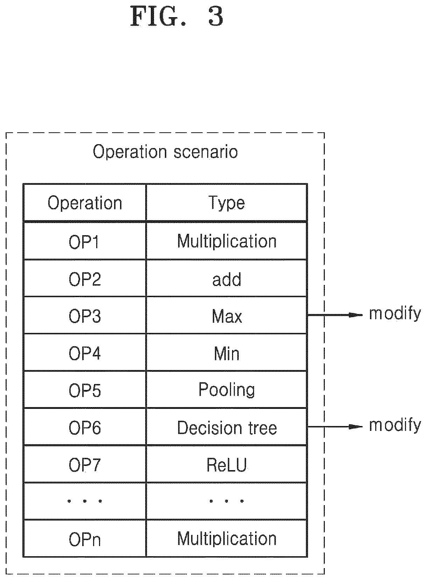

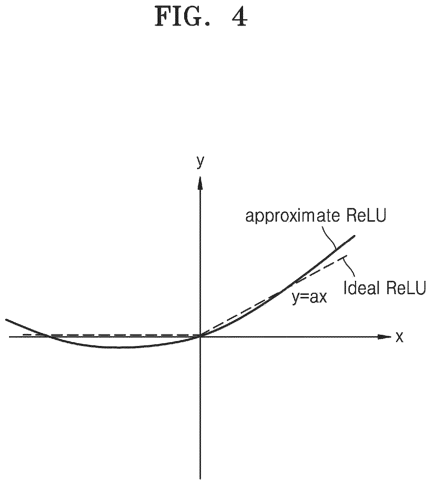

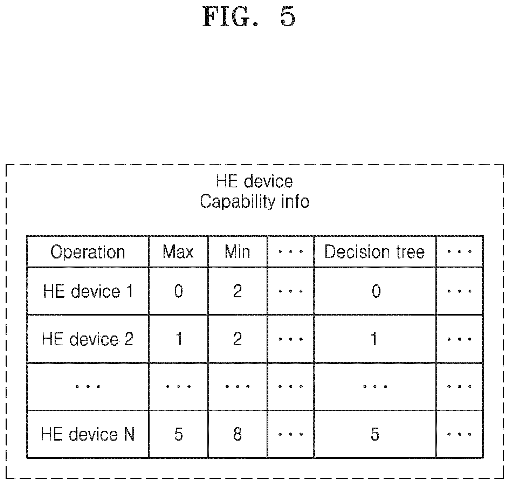

FIG. 2 is a block diagram illustrating a homomorphic encryption operation device according to one or more example embodiments. FIG. 3 is a diagram illustrating an operation scenario according to one or more example embodiments. FIG. 4 is a graph illustrating an ideal ReLU function and an approximate ReLU function. FIG. 5 is a diagram illustrating performance (or capability) information of a homomorphic encryption device according to one or more example embodiments.

The homomorphic encryption operation device 200 according to one or more example embodiments may include an operation circuit 210, an interface circuit 220, and a memory 230. The components included in the homomorphic encryption operation device 200 may communicate with each other through a bus 240. The homomorphic encryption operation device 200 may transmit and receive data to and from the homomorphic encryption device 100.

The homomorphic encryption operation device 200 may receive data (e.g., a ciphertext) from the homomorphic encryption device 100 through the interface circuit 220, and may provide data (e.g., ciphertext or modification information) to the homomorphic encryption device 100.

The calculation circuit 210 may include a processor including at least one core. The processor may execute a task stored in the memory 230 and store a result thereof in the memory 230. The operation circuit 210 may include a multiplication circuit 211, an add circuit 212, and an operation management circuit 213. The task may correspond to an operation scenario including a plurality of operations performed on a homomorphic ciphertext. The plurality of operations may be performed by the multiplication circuit 211 and the add circuit 212. An approximation operation may be performed by a polynomial approximation including multiple multiplication operations and addition operations.

The memory 230 may store various types of data related to the operation of the operation circuit 210. The memory 230 may include, for example, a dynamic random access memory (DRAM), a mobile DRAM, a static RAM (SRAM), a phase change RAM (PRAM), a ferroelectric RAM (FRAM), a resistive RAM (RRAM), and/or a magnetic RAM (MRAM).

Referring to FIG. 2, the memory 230 may store an operation scenario and homomorphic encryption device performance information.

Referring to FIG. 3, the operation scenario may include a plurality of operations OP1 to OPn that may be performed on a homomorphic ciphertext. The operation circuit 210 may sequentially perform the plurality of operations OP1 to OPn included in the operation scenario.

The plurality of operations OP1 to OPn may be various types of operations. For example, operations OP1 and OPn may be multiplication operations, operation OP2 may be an addition operation, operation OP3 may be a Max operation, operation OP4 may be a Min operation, operation OP5 may be a pooling operation, operation OP6 may be a decision tree operation, and operation OP7 may be a ReLU operation. The Max operation may be an operation that outputs a largest value among input values. The Min operation may be an operation that outputs a smallest value among input values. The pooling operation may be a Max pooling operation or an average pooling operation. The decision tree operation may be a method of performing a plurality of operations of multiple steps on an input value, and in each step, performing an operation corresponding to a condition, which is satisfied for the input value or an output value of a previous step, among a plurality of conditions. The ReLU operation may be an operation that multiplies an input value by a predetermined value and outputs the multiplied result when the input value is greater than 0, and outputs 0 when the input value is less than 0. In addition, the operation scenario may include various operations such as, for example but not limited to, a sigmoid operation, a Leaky ReLU operation, and an activation operation.

Referring to FIG. 4, an ideal ReLU operation may output a value of y = ax (here, a is a predetermined value) when a value of input x is greater than 0, and output 0 when the value of the input x is less than 0. That is, during the ReLU operation, it is necessary to determine whether a condition regarding whether the value of the input x is greater than 0 is satisfied. Due to the characteristics of the homomorphic encryption, only a polynomial operation may be performed on the homomorphic ciphertext, and thus an approximate ReLU operation using a polynomial may be performed on the homomorphic ciphertext. However, when performing an approximate ReLU operation, an operation complexity of the homomorphic ciphertext is greatly increased, and a depth of the homomorphic ciphertext may be greatly reduced due to numerous multiplication operations. The depth of the homomorphic ciphertext may correspond to a number of times or a length of multiplication operations that may be performed on the homomorphic ciphertext. Therefore, it is necessary to perform a bootstrapping operation to increase the depth of the homomorphic ciphertext after performing an approximate ReLU operation, but the bootstrapping operation may take a very long time.

Like the ReLU operation, in non-trivial operations such as a Max operation and a Min operation, since data values are encrypted, it may be difficult for the homomorphic encryption operation device 200 to directly compare sizes of the data values, and when performing an approximate operation, operation complexity may be very high.

Referring to FIGS. 3 and 5, the performance information of a homomorphic encryption (HE) device stored in the memory 230 may indicate a number of times of homomorphic operations allocated to the homomorphic encryption device. For example, for a homomorphic ciphertext generated by a first homomorphic encryption device, a number of times of the Max operation may be zero (that is, not performed), a number of times of the Min operation may be two (that is, performed twice), and a number of times of the decision tree operation may be zero (that is, not performed ). For a homomorphic ciphertext generated by a second homomorphic encryption device, the Max operation may be performed once, the Min operation may be performed twice, and the decision tree operations may be performed once. For a homomorphic ciphertext generated by an N-th homomorphic encryption device, the Max operation may be performed five times, the Min operation may be performed eight times, and the decision tree operations may be performed five times. The homomorphic encryption device 100 of FIG. 1 may correspond to the first homomorphic encryption device (HE device1) of FIG. 5.

Referring to FIGS. 3 and 5, since the number of times of the Max operation to be performed by the first homomorphic encryption device is zero, the operation management circuit 213 may modify the operation OP3, which corresponds to the Max operation. The multiplication circuit 211 and the add circuit 212 may perform a modified Max operation instead of a general Max operation. During the modified Max operation, input values may be output as they are, instead of outputting a largest value among input values according to the general Max operation. For example, when there are two input values of the Max operation, the Max operation is bypassed so that the two input values may be output as they are. The operation management circuit 213 may provide information on input values and conditions of the operation OP3, that is, modification information, to the homomorphic encryption device 100.

Furthermore, referring to FIGS. 3 and 5, since the number of times of the decision tree operation to be performed by the first homomorphic encryption device is zero, the operation management circuit 213 may modify the operation OP6, which corresponds to the decision tree operation. The multiplication circuit 211 and the add circuit 212 may perform a modified decision tree operation instead of a general decision tree operation. During the modified decision tree operation, one output value for the input value may not be output based on one of conditions of operations of multiple steps being satisfied, but output values of operations corresponding to all tree paths may be output regardless of whether the conditions of operations of multiple steps are satisfied. For example, for one input value, four output values may be output by four tree paths. For example, when there are two input values of the Max operation and two output values are output in the operation OP3 according to the modified Max operation, the number of the output values of the operation OP6 may be eight. The operation management circuit 213 may provide information on input values and conditions of the operation OP6, that is, modification information, to the homomorphic encryption device 100.

The homomorphic encryption operation device 200 may perform all operations of an operation scenario including a modified operation OP4 and a modified operation OP6, and may provide an operation result to the homomorphic encryption device 100. Using the above example, the homomorphic encryption device 100 may obtain eight decrypted data sets by decrypting the operation result. The homomorphic encryption device 100 may select one of eight decrypted data sets based on the modification information of the operation OP4 and the modification information of the operation OP6.

Since the homomorphic encryption operation device 200 may not perform an approximation operation on the operation OP3 and the operation OP6, an operation complexity may be lowered, and accordingly, the length of the ciphertext generated by the homomorphic encryption device 100 may be shortened.

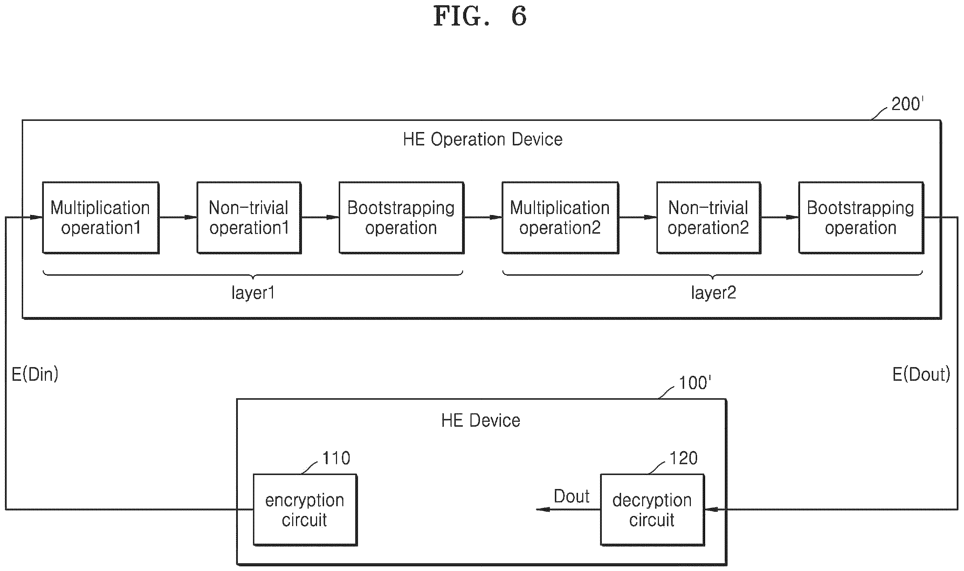

FIG. 6 is a block diagram illustrating a machine learning operation according to a comparative example.

Referring to FIG. 6, a homomorphic encryption device 100' may include an encryption circuit 110 and a decryption circuit 120. The encryption circuit 110 may generate a homomorphic ciphertext E(Din) using a homomorphic encryption algorithm. The encryption circuit 110 may provide a homomorphic ciphertext E(Din) to a homomorphic encryption operation device 200'.

The homomorphic encryption operation device 200' may perform a machine learning operation.

The machine learning operation may include operations of a first layer and a second layer (layer1 and layer2). The number of layer operations included in the machine learning operation is not limited thereto.

During the first layer (layer1) operation, the homomorphic encryption operation device 200' may perform a first multiplication operation, a first non-trivial operation, and a bootstrapping operation.

An input value may be matrix data. The first multiplication operation may correspond to a convolution operation used in machine learning. The first non-trivial operation may correspond to an activation operation used in machine learning. A size of the matrix data may be changed by the first multiplication operation.

The first non-trivial operation may be performed through a polynomial approximation, and a plurality of numbers of times of multiplication operations and addition operations may be performed by the polynomial approximation. Therefore, the depth of the homomorphic ciphertext may be rapidly reduced.

A bootstrapping operation may be performed to increase the depth of the homomorphic ciphertext. The bootstrapping operation may mean an operation of increasing the length of the homomorphic ciphertext. By increasing the depth of the homomorphic ciphertext, an operation may be performed in the second layer.

During the second layer (layer2) operation, the homomorphic encryption operation device 200' may perform a second multiplication operation, a second non-trivial operation, and a bootstrapping operation. The size of the matrix data may be changed by the second multiplication operation. Encrypted data E(Dout) may be generated through the second layer operation.

The homomorphic encryption device 100' may receive encrypted data E(Dout). The decryption circuit 120 may generate decrypted data Dout by decrypting the encrypted data E(Dout).

Referring to FIG. 6, each layer of a machine learning operation requires a non-trivial operation and a bootstrapping operation with a high operation complexity, and accordingly, the homomorphic encryption operation device 200' may be required to have a high performance. Furthermore, since the length of the homomorphic ciphertext should be lengthened in proportion to the operation complexity due to the homomorphic encryption characteristics, the homomorphic encryption device 100' may also be required to have a high performance.

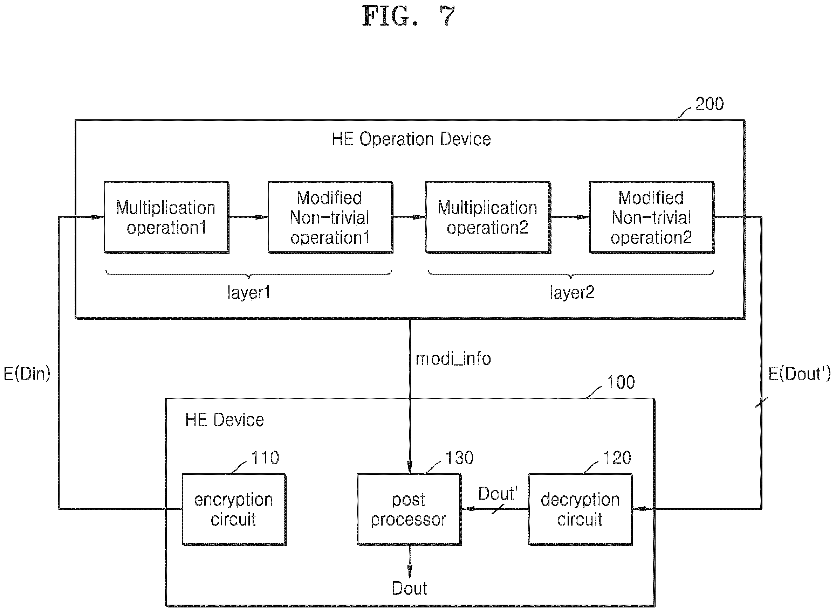

FIG. 7 is a block diagram illustrating a machine learning operation according to one or more example embodiments.

Referring to FIG. 7, the homomorphic encryption device 100 according to one or more example embodiments may further include an encryption circuit 110, a decryption circuit 120, and a post processor 130.

The encryption circuit 110 may provide encrypted data E(Din) to the homomorphic encryption operation device 200.

The homomorphic encryption operation device 200 may perform a machine learning operation.

The homomorphic encryption operation device 200 may perform a first multiplication operation and a first modified non-trivial operation in the first layer. However, embodiments are not limited thereto, and the homomorphic encryption operation device 200 may perform a non-trivial operation as it is (that is, without modification) with reference to the homomorphic encryption device performance information. That is, the homomorphic encryption operation device 200 may perform a first non-trivial operation as it is based on the number of times of non-trivial operations allocated to the homomorphic encryption device.

A number of an output value of the non-trivial operation of FIG. 6 may be different from a number of an output value of the first modified non-trivial operation and/or a number of an output value the second modified non-trivial operation of FIG. 7. For example, the non-trivial operation of FIG. 6 may generate an output value according to one of various condition paths, and the number of the output value may be one. The first modified non-trivial operation and the second modified non-trivial operations of FIG. 7 may generate a plurality of output values corresponding to all condition paths. In one or more embodiments, the multiplication operation and the non-trivial operation may be matrix operations, and the output value may mean one matrix value. The first modified non-trivial operation may generate N output values for one input value. A condition path may correspond to a branch of a decision tree. The number of output values of the non-trivial operation may be the same as a number of leaf nodes of the decision tree.

The homomorphic encryption operation device 200 may perform a second multiplication operation and a second modified non-trivial operation in the second layer. However, embodiments are not limited thereto, and the homomorphic encryption operation device 200 may perform a non-trivial operation as it is (that is, without modification) with reference to the homomorphic encryption device performance information. The second modified non-trivial operation may generate M output values for one input value. Since the number of output values of the first modified non-trivial operation is N, the number of output values of the second modified non-trivial operation may be a total of N×M.

The homomorphic encryption operation device 200 may generate encrypted data E(Dout') through the second layer. The encrypted data E(Dout') may be a ciphertext including N×M output values.

The homomorphic encryption operation device 200 may provide modification information modi_info to the homomorphic encryption device 100. The modification information modi_info may include information on input values and conditions of the first and second modified non-trivial operations. The modification information modi_info may include modification information corresponding to the first modified non-trivial operation and modification information corresponding to the second modified non-trivial operation.

The decryption circuit 120 of the homomorphic encryption device 100 may acquire decrypted data Dout' by decrypting the encrypted data E(Dout'). The decrypted data Dout' may include N×M output values.

The post processor 130 may perform a selection operation on the decrypted data Dout' based on the modification information modi_info received from the homomorphic encryption operation device 200. The selection operation may mean an operation for selecting one of N×M output values. In one or more embodiments, M output values of N×M output values may be selected based on the modification information modi_info of the first modified non-trivial operation. One output value among the selected M output values may be selected based on the modification information modi_info of the second modified non-trivial operation.

The post processor 130 may generate the same data as the decrypted data Dout generated by the homomorphic encryption device 100' of FIG. 6.

Referring to FIG. 7, the homomorphic encryption operation device 200 may modify a non-trivial operation according to the performance of the homomorphic encryption device 100 and perform the modified non-trivial operation.

The homomorphic encryption operation device 200 may generate a plurality of output values by performing operations corresponding to all condition paths of the modified non-trivial operation (e.g., the first modified non-trivial operation in the first layer and the second modified non-trivial operation in the second layer), and the homomorphic encryption device 100 may select at least one of the plurality of output values using the input values and conditions (e.g., modification information) of the non-trivial operation.

Accordingly, the complexity of the homomorphic operation performed by the homomorphic encryption operation device 200 may be lowered, and the complexity of the homomorphic encryption performed by the homomorphic encryption device 100 may be lowered.

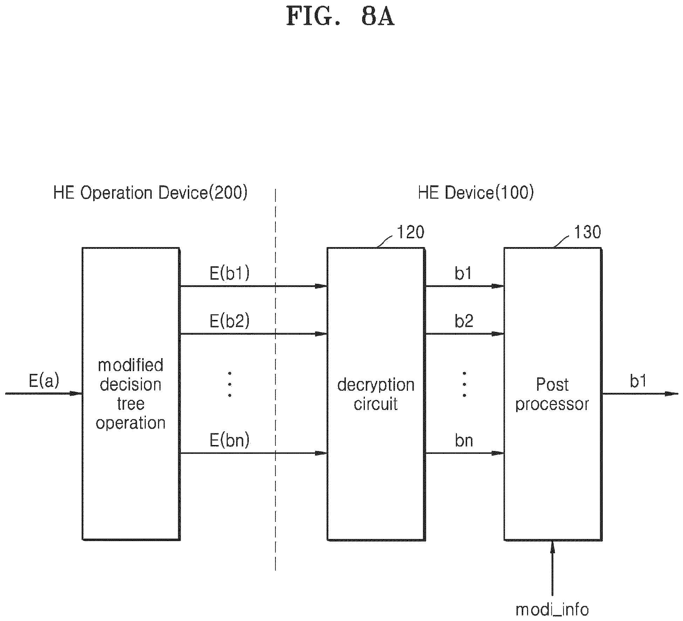

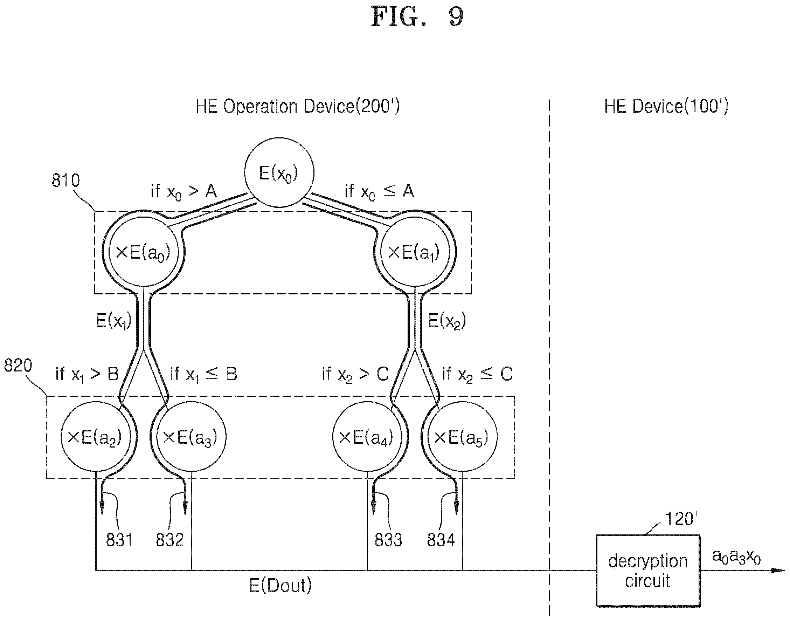

FIGS. 8A to 8C are diagrams illustrating a modified decision tree operation according to one or more example embodiments. FIG. 9 is a diagram illustrating a decision tree operation of a comparative example.

Referring to FIGS. 2 and 8A, the operation circuit 210 of the homomorphic encryption operation device 200 may perform a modified decision tree operation on an input ciphertext $E(a)$. The input ciphertext $E(a)$ may be generated by performing a multiplication operation on the ciphertext received from the homomorphic encryption device 100. Hereinafter, the input ciphertext $E(a)$ may also be referred to as an input value. The modified decision tree operation may output output values $E(b1)$ to $E(bn)$ corresponding to all condition paths of the decision tree operation.

The decision tree operation may output an output value corresponding to one of all condition paths, but the operation complexity may be large due to a polynomial approximation.

Unlike the decision tree operation, the modified decision tree operation may not make a determination with respect to conditions or rules and may perform operations corresponding to all branches of a decision tree, and thus an approximation operation may not be required.

Information (e.g., modification information modi_info) on the input value $E(a)$ and conditions of the decision tree operation may be provided to the homomorphic encryption device 100.

The decryption circuit 120 may generate decrypted values $b1$ to $bn$ by decrypting the output values $E(b1)$ to $E(Bn)$. Each of the decrypted values $b1$ to $bn$ may be matrix data.

The post processor 130 may select one of the decrypted values $b1$ to $bn$ based on the modification information modi_info. As shown in FIG. 8A, when an output value corresponding to a condition path that satisfies the condition(s) for an input value $a$, which is encrypted into the input ciphertext $E(a)$, is $b1$, the post processor 130 may select and output $b1$ among the decrypted values $b1$ to $bn$.

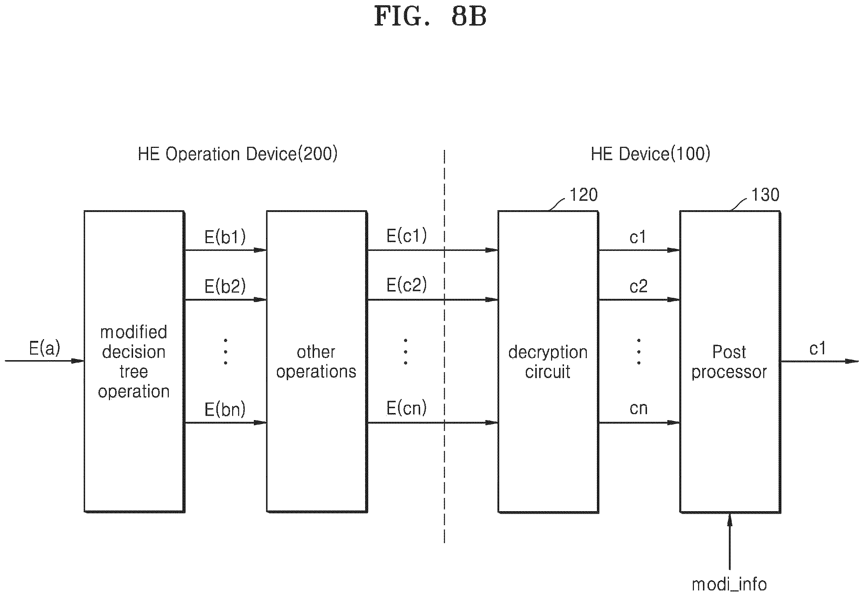

Referring to FIG. 8B, the homomorphic encryption operation device 200 may perform the modified decision tree operation and then perform other operations. Other operations may include at least one of operations included in the operation scenario (e.g., operation scenario of FIG. 3). As illustrated in FIG. 8B, one input value input to other operations may correspond to one output value of the modified decision tree operation, but embodiments are not limited thereto. At least one of the other operations may include a modified non-trivial operation.

As described above with reference to FIG. 8A, the modified decision tree operation may output output values $E(b1)$ to $E(bn)$. Information (e.g., modification information modi_info) on the input value $E(a)$ and conditions of the decision tree operation may be provided to the homomorphic encryption device 100. The output values $E(b1)$ to $E(bn)$ may be used as inputs for other operations, and output values $E(c1)$ to $E(cn)$ may be generated by other operations. The output values $E(c1)$ to $E(cn)$ may be provided to the homomorphic encryption device 100.

The decryption circuit 120 may generate decrypted values $c1$ to $cn$ by decrypting the output values $E(c1)$ to $E(cn)$. Each of the decrypted values $c1$ to $cn$ may be matrix data.

The post processor 130 may select one of the decrypted values $c1$ to $cn$ based on the modification information modi_info. As shown in FIG. 8B, when the output value corresponding to the condition path satisfying the conditions for the input value $a$, which is encrypted into the input ciphertext $E(a)$, is $c1$, the post processor 130 may select and output $c1$ among the decrypted values $c1$ to $cn$.

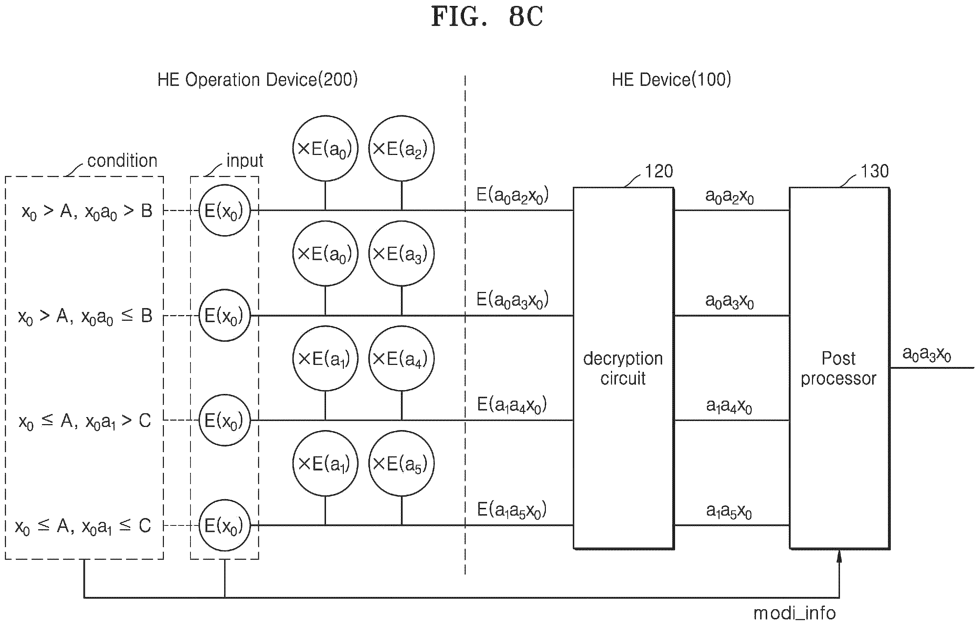

Referring to FIG. 8C, the homomorphic encryption operation device 200 may generate a plurality of output values $E(a_0a_2x_0)$, $E(a_0a_3x_0)$, $E(a_1a_4x_0)$, and $E(a_1a_5x_0)$ by performing operations corresponding to all condition paths on the input value $E(x_0)$.

As illustrated in FIG. 8C, there may be four condition paths for the input value $E(x_0)$, and an output value $E(a_0a_2x_0)$ may be output by an operation corresponding to a condition path where $x_0>A$ and $x_0a_0>B$, an output value $E(a_0a_3x_0)$ may be output by an operation corresponding to a condition path where $x_0>A$ and $x_0a_0\leq B$, an output value $E(a_1a_4x_0)$ may be output by an operation corresponding to a condition path where $x_0\leq A$ and $x_0a_1>C$, and an output value $E(a_1a_5x_0)$ may be output by an operation corresponding to a condition path where $x_0\leq A$ and $x_0a_1\leq C$.

The decryption circuit 120 may generate output values $a_0a_2x_0$, $a_0a_3x_0$, $a_1a_4x_0$, and $a_1a_5x_0$ by decrypting the output values $E(a_0a_2x_0)$, $E(a_0a_3x_0)$, $E(a_1a_4x_0)$, and $E(a_1a_5x_0)$.

The post processor 130 may select one of the output values based on information (e.g., modification information modi_info) on the condition and the input value.

In one or more embodiments, the post processor 130 may determine which of the four conditions the value of $x_0$ satisfies, and select an output value corresponding to the satisfying condition. For example, when the value of $x_0$ satisfies

the second condition, that is, $x_0 > A$ and $x_0 a_0 \leq B$, the post processor 130 may output the second output value $a_0 a_3 x_0$.

Referring to FIG. 9, a decision tree operation may include a first depth operation 810 and a second depth operation 820. In the first depth operation 810, if $x_0$ is greater than A, a multiplication operation for $E(x_0)$ and $E(a_0)$ may be performed. The resulting value of the multiplication operation for $E(x_0)$ and $E(a_0)$ may be referred to as $E(x_1)$. Alternatively, if $x_0$ is equal to or less than A, a multiplication operation for $E(x_0)$ and $E(a_1)$ may be performed. The resulting value of the multiplication operation for $E(x_0)$ and $E(a_1)$ may be referred to as $E(x_2)$.

In the second depth operation 820, if $x_1$ is greater than B, a multiplication operation for $E(x_1)$ and $E(a_2)$ may be performed. Alternatively, if $x_1$ is equal to or less than B, a multiplication operation for $E(x_1)$ and $E(a_3)$ may be performed. In the second depth operation 820, if $x_2$ is greater than C, a multiplication operation for $E(x_2)$ and $E(a_4)$ may be performed. Alternatively, if $x_2$ is equal to or less than C, a multiplication operation for $E(x_2)$ and $E(a_5)$ may be performed.

That is, the decision tree operation includes operations corresponding to the first to fourth condition paths 831 to 834, and operation values according to the first to fourth condition paths 831 to 834 may be $E(a_0)E(a_2)E(x_0)$, $E(a_0)E(a_3)E(x_0)$, $E(a_1)E(a_4)E(x_0)$, and $E(a_1)E(a_5)E(x_0)$.

Since the homomorphic encryption operation device 200 does not know the value of $x_0$, the satisfying condition may not be determined, and an output value E(Dout) may be generated as shown in Equation 1 below.

[Equation 1]

$$E(\text{Dout}) = E\big(\text{comp}(x_0, A)\big)E\big(\text{comp}(x_1, B)\big)E(a_0)E(a_2)E(x_0)$$

$$+ E\big(\text{comp}(x_0, a_0)\big)E\big(\text{comp}(x_1, a_3)\big)E(a_0)E(a_3)E(x_0)$$

$$+ E\big(\text{comp}(x_0, a_1)\big)E\big(\text{comp}(x_2, a_4)\big)E(a_1)E(a_4)E(x_0)$$

$$+ E\big(\text{comp}(x_0, a_1)\big)E\big(\text{comp}(x_2, a_5)\big)E(a_1)E(a_5)E(x_0)$$

Here, comp(x, y) may be an operation in which 1 is output when x is greater than y and 0 is output when x is less than or equal to y.

According to [Equation 1], if $x_0 > A$ and $x_1 > B$ according to the first condition path 831, E(Dout) may be $E(a_0)E(a_2)E(x_0)$, if $x_0 > A$ and $x_1 \leq B$ according to the second condition path 832, E(Dout) may be $E(a_0)E(a_3)E(x_0)$, if $x_0 \leq A$ and $x_1 > C$ according to the third condition path 833, E(Dout) may be $E(a_1)E(a_4)E(x_0)$, and if $x_0 \leq A$ and $x_1 \leq C$ according to the fourth condition path 834, E(Dout) may be $E(a_1)E(a_5)E(x_0)$. According to homomorphic operation characteristics, $E(a_0)E(a_2)E(x_0)=E(a_0 a_2 x_0)$, $E(a_0)E(a_3)E(x_0)=E(a_0 a_3 x_0)$, $E(a_1)E(a_4)E(x_0)=E(a_1 a_4 x_0)$, and $E(a_1)E(a_5)E(x_0)=E(a_1 a_5 x_0)$.

The homomorphic encryption operation device 200' may perform an approximation operation through a polynomial approximation in order to perform a comp(x, y) operation.

For example, according to the value of $x_0$, an output value according to the second condition path 832 may be provided to the decryption circuit 120', and the decryption circuit 120' may obtain an output value $a_0 a_3 x_0$ by decrypting the output value.

Unlike FIG. 8C, since the homomorphic encryption operation device 200' performs an approximation operation to perform a decision tree operation, the complexity of the decision tree operation of FIG. 9 may be greater than that of the modified decision tree operation of FIG. 8C.

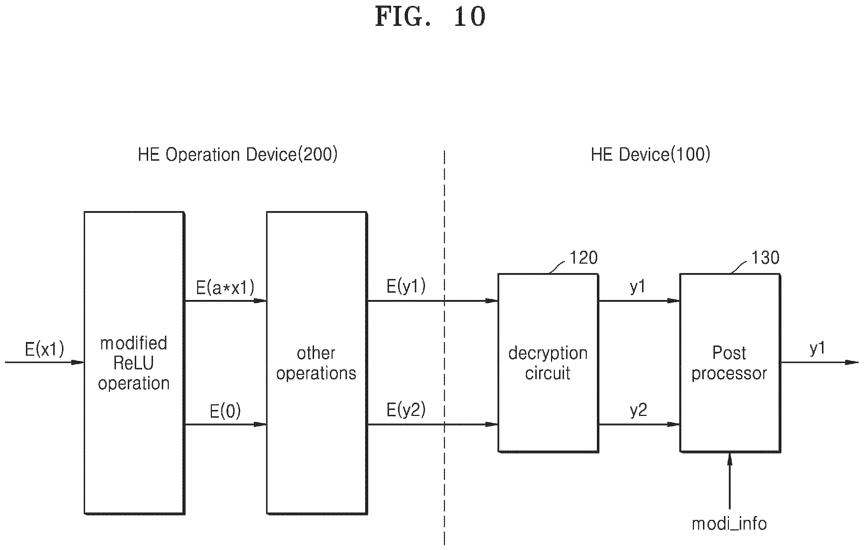

FIG. 10 is a diagram illustrating a modified ReLU operation according to one or more example embodiments.

Referring to FIG. 10, the ReLU operation may be an operation of outputting $a \times x1$ when an input value x1 is greater than 0, and outputting 0 when an input value x1 is less than or equal to 0.

The modified ReLU operation may generate two output values by performing operations corresponding to both conditions. In one or more embodiments, the modified ReLU operation may generate an output value $E(a \times x_1)$ by multiplying $E(x_1)$ and E(a), and may generate an output value E(0) by multiplying $E(x_1)$ and E(0).

The homomorphic encryption operation device 200 may provide information on two conditions and $E(x_1)$ to the homomorphic encryption device 100 as the modification information modi_info.

Output values E(y1) and E(y2) may be respectively generated by performing other operations using the output values $E(a \times x1)$ and E(0) as input values.

The homomorphic encryption device 100 may receive output values E(y1) and E(y2). The decryption circuit 120 may generate output values y1 and y2 by decrypting the output values E(y1) and E(y2).

The post processor 130 may select one of the output values y1 and y2 based on the modification information modi_info. In one or more embodiments, the post processor 130 may select y1 when x1 is greater than 0, and may select y2 when x1 is less than or equal to 0. In FIG. 10, since x1 is greater than 0, the post processor 130 may output y1.

In one or more embodiments, other operations may not be performed on the output values $E(a \times x1)$ and $E(0)$, and the output values $E(a \times x1)$ and $E(0)$ may be provided directly to the homomorphic encryption device 100. In one or more embodiments, at least one of the other operations, which are performed on the output values $E(a \times x1)$ and $E(0)$, may be a modified non-trivial operation, and accordingly, three or more output values may be provided from the homomorphic encryption operation device 200 to the homomorphic encryption device 100. In this case, the modification information modi_info may further include information on input values and conditions of the modified non-trivial operation, included in the other operations, and the homomorphic encryption device 100 may select one output value based on the modification information modi_info.

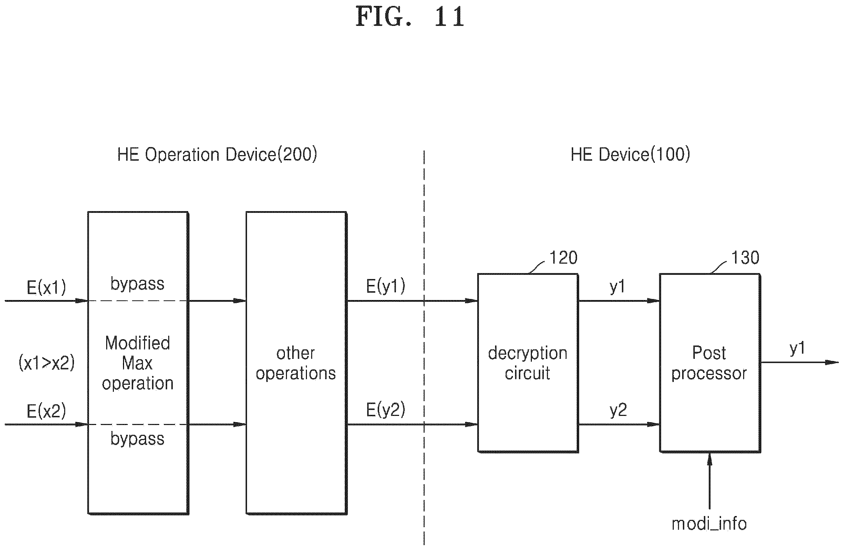

FIG. 11 is a diagram illustrating a modified Max operation according to one or more example embodiments.

The Max operation may be an operation of outputting a ciphertext corresponding to a larger value among x1 and x2. In case of x1>x2, the general Max operation may output $E(x1)$.

Referring to FIG. 11, the modified Max operation may output input values $E(x1)$ and $E(x2)$ by bypassing the Max operation on the input values $E(x1)$ and $E(x2)$. Therefore, other operations following the modified Max operation may perform operations on each of the input values $E(x1)$ and $E(x2)$ and respectively generate output values $E(y1)$ and $E(y2)$.

The homomorphic encryption operation device 200 may provide information on the condition of the Max operation and the input value $E(x1)$ to the homomorphic encryption device 100 as the modification information modi_info.

The homomorphic encryption device 100 may receive the output values $E(y1)$ and $E(y2)$. The decryption circuit 120 may generate output values y1 and y2 by decrypting the output values $E(y1)$ and $E(y2)$.

The post processor 130 may select one of the output values y1 and y2 based on the modification information modi_info. In one or more embodiments, the post processor 130 may compare x1 and x2 with each other and select y1 if x1>x2.

In one or more embodiments, other operations may not be performed on the input values $E(x1)$ and $E(x2)$ bypassing the Max operation, and the $E(x1)$ and $E(x2)$ may be directly provided to the homomorphic encryption device 100. In one or more embodiments, at least one of the other operations, which are performed on the output values $E(x1)$ and $E(Ex)$, may be a modified non-trivial operation, and accordingly, three or more output values may be provided from the homomorphic encryption operation device 200 to the homomorphic encryption device 100. In this case, the modification information modi_info may further include information on input values and conditions of the modified non-trivial operation, included in the other operations, and the homomorphic encryption device 100 may select one output value based on the modification information modi_info.

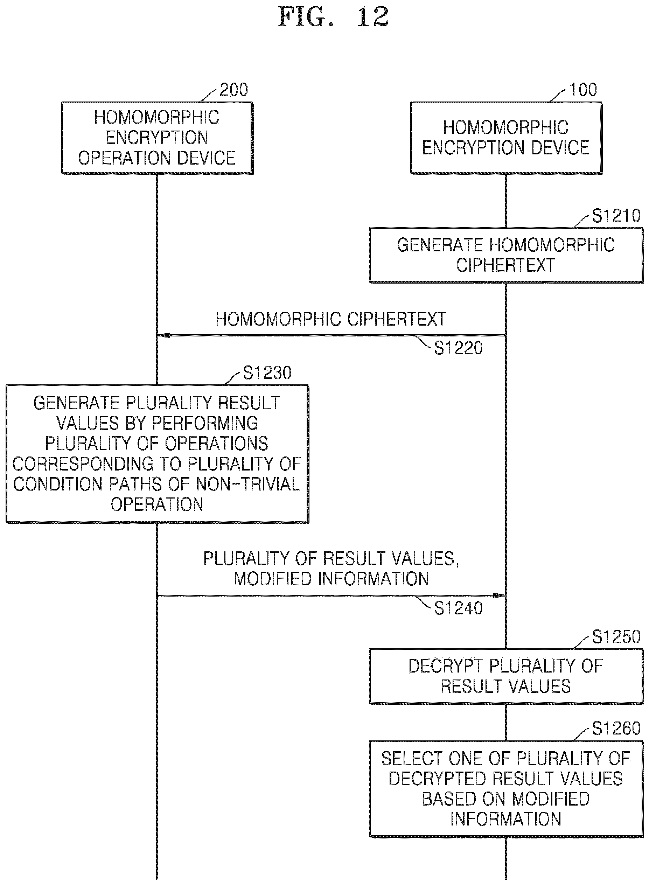

FIG. 12 is a flowchart diagram illustrating an operating method of a homomorphic encryption system according to one or more example embodiments.

Referring to FIG. 12, the homomorphic encryption device 100 may generate a homomorphic ciphertext using a homomorphic encryption algorithm (S1210). The homomorphic encryption device 100 may provide the homomorphic ciphertext to the homomorphic encryption operation device 200 (S1220).

The homomorphic encryption operation device 200 may generate a plurality of result values by performing a plurality of operations on the homomorphic ciphertext corresponding to a plurality of condition paths of the non-trivial operation (S1230). In one or more embodiments, the operation circuit 210 described above with reference to FIGS. 1 to 11 may perform a non-trivial operation as it is or a modified non-trivial operation based on the performance information of the homomorphic encryption device 100.

The homomorphic encryption operation device 200 may provide the plurality of result values and the modification information to the homomorphic encryption device 100 (S1240). The modification information may include information on an input value input to the non-trivial operation and conditions of the non-trivial operation.

The homomorphic encryption device 100 may obtain decrypted result values by decrypting the plurality of result values (S1250).

The homomorphic encryption device 100 may select one of a plurality of decrypted result values based on the modification information (S1260). In one or more embodiments, the post processor 130 described above with reference to FIGS. 1 to 11 may select one of the plurality of decrypted result values.

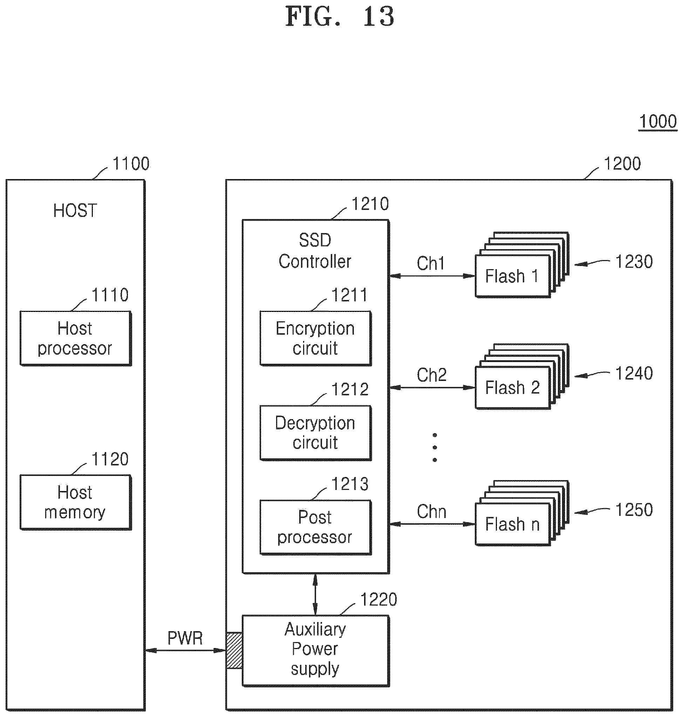

FIG. 13 is a block diagram illustrating a solid state drive (SSD) system according to embodiments.

Referring to FIG. 13, an SSD system 1000 may include a host 1100 and an SSD 1200. The SSD 1200 may transmit and receive signals to and from the host 1100 through a signal connector (not shown), and may receive power PWR through a power connector. The SSD 1200 may receive the ciphertext and the modification information from the host 1100 through the signal connector, and may provide the ciphertext to the host 1100.

The SSD1220 may include an SSD controller 1210, an auxiliary power supply 1220, and a plurality of flash memory devices 1230, 1240, and 1250. The SSD controller 1210 may include an encryption circuit 1211, a decryption circuit 1212, and a post processor 1213.

The encryption circuit 1211 may correspond to the encryption circuit 110 of FIG. 7. The decryption circuit 1212 may correspond to the decryption circuit 120 of any of FIGS. 7, 8A, 8B, 8C, 10 and 11. The post processor 1213 may correspond to the post processor 130 of any of FIGS. 1, 7, 8A, 8B, 8C, 10 and 11.

The host 1100 may include a host processor 1110 and a host memory 1120. The host processor 1110 may correspond to the operation circuit 210 of any of FIGS. 1 and 2. The host memory 1120 may correspond to the memory 230 of FIG. 2.

While the inventive concept has been particularly shown and described with reference to example embodiments thereof, it will be understood that various changes in form and details may be made therein without departing from the scope of the following claims.

## Claims

1. A homomorphic encryption device, comprising:

   an encryption circuit (110; 1211) configured to encrypt original data into a ciphertext by using a homomorphic encryption algorithm, and provide, to a homomorphic encryption operation device (200), the ciphertext based on which an input ciphertext is generated and, for a first conditional operation, a plurality of operations corresponding to a plurality of condition paths are performed on the input ciphertext, each of the plurality of condition paths including at least one operation condition;
   a decryption circuit (120; 1212) configured to receive, from the homomorphic encryption operation device (200), a plurality of first operation values generated from the plurality of operations, and decrypt the plurality of first operation values; and
   a post processor (130; 1213) configured to receive, from the homomorphic encryption operation device (200), information (modi_info) about the input ciphertext and a plurality of operation conditions included in the plurality of condition paths, and select one of the plurality of decrypted first operation values based on the received information (modi_info).

2. The homomorphic encryption device of claim 1, wherein a plurality of conditional operations are performed on the input ciphertext in the homomorphic encryption operation device (200), and the first conditional operation is selected among the plurality of conditional operations based on a number of the first conditional operation allocated to the homomorphic encryption device (100).

3. The homomorphic encryption device of claim 2, wherein, the decryption circuit (120; 1212) receives, for each of remaining conditional operations of the plurality of conditional operations other than the first conditional operation, an operation value for at least one operation corresponding to one condition path from the homomorphic encryption operation device (200).

4. The homomorphic encryption device of any one of claims 1 to 3, wherein the post processor (130; 1213) receives information about the input ciphertext generated based on a multiplication operation on the ciphertext, from the homomorphic encryption operation device (200).

5. The homomorphic encryption device of any one of claims 1 to 4, wherein the decryption circuit (120; 1212) is further configured to receive, from the homomorphic encryption operation device (200), a plurality of second operation values generated from performing at least one homomorphic operation based on the plurality of first operation values, and decrypt the plurality of second operation values, and
   wherein the post processor (130; 1213) is further configured to select one of the plurality of decrypted second operation values based on the input ciphertext and the information (modi_info) about the plurality of operation conditions.

6. The homomorphic encryption device of any one of claims 1 to 5, wherein the first conditional operation comprises one of a Max operation, a Min operation, a pooling operation, a decision tree operation, a rectified linear unit, ReLU, operation, a leaky ReLU operation, and an activation operation.

7. The homomorphic encryption device of any one of claims 1 to 6, wherein the post processor (130; 1213) is further configured to select a first operation value corresponding to one condition path determined based on the input ciphertext and the plurality of operation conditions from among the plurality of decrypted first operation values.

8. The homomorphic encryption device of any one of claims 1 to 7, wherein the plurality of operations comprise an operation that generates the plurality of first operation values by bypassing the first conditional operation on the input ciphertext.

9.  A method of operating a homomorphic encryption device (100), the method comprising:

    encrypting original data into a ciphertext by using a homomorphic encryption algorithm, and providing, to a homomorphic encryption operation device (200), the ciphertext based on which an input ciphertext is generated and for a first conditional operation, a plurality of operations corresponding to a plurality of condition paths are performed on the input ciphertext, each of the plurality of condition paths including at least one operation condition;

    receiving, from the homomorphic encryption operation device (200), a plurality of first operation values generated from the plurality of operations, and decrypting the plurality of first operation values; and

    receiving, from the homomorphic encryption operation device (200), information (modi_info) about the input ciphertext and a plurality of operation conditions included in the plurality of condition paths, and selecting one of the plurality of decrypted first operation values based on the received information (modi_info).

10. The method of claim 9, wherein a plurality of conditional operations are performed on the input ciphertext in the homomorphic encryption operation device (200), and the first conditional operation is selected among the plurality of conditional operations based on a number of the first conditional operation allocated to the homomorphic encryption device (100).

11. The method of claim 10, wherein, further comprising: receiving, for each of remaining conditional operations of the plurality of conditional operations other than the first conditional operation, an operation value for at least one operation corresponding to one condition path from in the homomorphic encryption operation device (200).

12. The method of any one of claims 9 to 11, wherein the receiving, from the homomorphic encryption operation device (200), information about the input ciphertext, comprises:

    receiving, from the homomorphic encryption operation device (200), information (modi_info) about the input ciphertext generated based on a multiplication operation on the ciphertext, from the homomorphic encryption operation device (200).

13. The method of any one of claims 9 to 12, further comprising:

    receiving, from the homomorphic encryption operation device (200), a plurality of second operation values generated from performing at least one homomorphic operation based on the plurality of first operation values;

    decrypting the plurality of second operation values; and

    selecting one of the plurality of decrypted second operation values based on the input ciphertext and the information (modi_info) about the plurality of operation conditions.

14. The method of any one of claims 9 to 13, wherein the selecting the one of the plurality of decrypted first operation values comprises selecting a first operation value corresponding to one condition path determined based on the input ciphertext and the plurality of operation conditions from among the plurality of decrypted first operation values.

15. The method of any one of claims 9 to 14, wherein the plurality of operations comprise an operation that generates the plurality of first operation values by bypassing the first conditional operation on the input ciphertext.

# FIG. 1

10

100

HE Device
(User Device)

Ciphertext →

HE Operation
Device
(Server)

200

Operation Result ←

130

Post
processor

210

Operation
circuit

# FIG. 2

# FIG. 3

| Operation scenario | |
|---|---|
| **Operation** | **Type** |
| OP1 | Multiplication |
| OP2 | add |
| OP3 | Max |
| OP4 | Min |
| OP5 | Pooling |
| OP6 | Decision tree |
| OP7 | ReLU |
| . . . | . . . |
| OPn | Multiplication |

OP3 — modify

OP6 — modify

# FIG. 4

# FIG. 5

HE device
Capability info

| Operation | Max | Min | · · · | Decision tree | · · · |
|-----------|-----|-----|-------|---------------|-------|
| HE device 1 | 0 | 2 | · · · | 0 | · · · |
| HE device 2 | 1 | 2 | · · · | 1 | · · · |
| · · · | · · · | · · · | · · · | · · · | · · · |
| HE device N | 5 | 8 | · · · | 5 | · · · |

FIG. 6

HE Operation Device — 200'

Multiplication operation1 → Non-trivial operation1 → Bootstrapping operation → Multiplication operation2 → Non-trivial operation2 → Bootstrapping operation

layer1

layer2

E(Din)

E(Dout)

HE Device — 100'

110
encryption circuit

120
decryption circuit

Dout

# FIG. 7

# FIG. 8A

HE Operation Device(200) | HE Device(100)

# FIG. 8B

HE Operation Device(200)

HE Device(100)

E(a) → modified decision tree operation

— E(b1) → other operations — E(c1) → decryption circuit (120) — c1 → Post processor (130) — c1 →

— E(b2) → — E(c2) → — c2 —

— E(bn) → — E(cn) → — cn —

modi_info

EP 4 568 165 A1

# FIG. 8C

HE Operation Device(200)                    HE Device(100)

condition    input

$\times E(a_0)$  $\times E(a_2)$

$x_0 > A, x_0 a_0 > B$ — $E(x_0)$ —— $E(a_0 a_2 x_0)$

$\times E(a_0)$  $\times E(a_3)$

$x_0 > A, x_0 a_0 \leq B$ — $E(x_0)$ —— $E(a_0 a_3 x_0)$

$\times E(a_1)$  $\times E(a_4)$

$x_0 \leq A, x_0 a_1 > C$ — $E(x_0)$ —— $E(a_1 a_4 x_0)$

$\times E(a_1)$  $\times E(a_5)$

$x_0 \leq A, x_0 a_1 \leq C$ — $E(x_0)$ —— $E(a_1 a_5 x_0)$

120 — decryption circuit

$a_0 a_2 x_0$
$a_0 a_3 x_0$
$a_1 a_4 x_0$
$a_1 a_5 x_0$

130 — Post processor → $a_0 a_3 x_0$

modi_info

EP 4 568 165 A1

FIG. 9

HE Operation Device(200')  HE Device(100')

810

if $x_0 > A$    $E(x_0)$    if $x_0 \leq A$

$\times E(a_0)$    $\times E(a_1)$

$E(x_1)$    $E(x_2)$

820

if $x_1 > B$    if $x_1 \leq B$    if $x_2 > C$    if $x_2 \leq C$

$\times E(a_2)$    $\times E(a_3)$    $\times E(a_4)$    $\times E(a_5)$

831    832    833    834

E(Dout)

120'

decryption circuit    $a_0 a_3 x_0$

EP 4 568 165 A1

# FIG. 10

HE Operation Device(200)    HE Device(100)

modified ReLU operation → E(a*x1) → other operations → E(y1) → decryption circuit (120) → y1 → Post processor (130) → y1

E(x1) → modified ReLU operation → E(0) → other operations → E(y2) → decryption circuit → y2 → Post processor → modi_info

EP 4 568 165 A1

## FIG. 11

**HE Operation Device(200)**

**HE Device(100)**

E(x1) → bypass → Modified Max operation → other operations → E(y1) → decryption circuit (120) → y1 → Post processor (130) → y1

(x1>x2)

E(x2) → bypass

E(y2) → y2

modi_info

# FIG. 12

200
HOMOMORPHIC
ENCRYPTION
OPERATION DEVICE

100
HOMOMORPHIC
ENCRYPTION DEVICE

S1210
GENERATE HOMOMORPHIC
CIPHERTEXT

HOMOMORPHIC CIPHERTEXT
S1220

S1230
GENERATE PLURALITY RESULT
VALUES BY PERFORMING
PLURALITY OF OPERATIONS
CORRESPONDING TO PLURALITY OF
CONDITION PATHS OF NON-TRIVIAL
OPERATION

PLURALITY OF RESULT VALUES,
MODIFIED INFORMATION
S1240

S1250
DECRYPT PLURALITY OF
RESULT VALUES

S1260
SELECT ONE OF PLURALITY OF
DECRYPTED RESULT VALUES
BASED ON MODIFIED
INFORMATION

# FIG. 13

Europäisches
Patentamt

European
Patent Office

Office européen
des brevets

# EUROPEAN SEARCH REPORT

**Application Number**

EP 24 21 4830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/376995 A1 (RATHA NALINI K [US] ET AL) 2 December 2021 (2021-12-02) * paragraph [0084] - paragraph [0087]; figures 6, 7 * | 1-15 | INV. H04L9/00 |
| A | WO 2023/184249 A1 (MICROSOFT TECHNOLOGY LICENSING LLC [US]) 5 October 2023 (2023-10-05) * paragraph [0043] - paragraph [0046]; figure 6A * | 1-15 | |
| A | ISHIYAMA TAKUMI ET AL: "Highly Accurate CNN Inference Using Approximate Activation Functions over Homomorphic Encryption", 2020 IEEE INTERNATIONAL CONFERENCE ON BIG DATA (BIG DATA), IEEE, 10 December 2020 (2020-12-10), pages 3989-3995, XP033889067, DOI: 10.1109/BIGDATA50022.2020.9378372 [retrieved on 2021-03-12] * paragraph [0039] - paragraph [0082] * * paragraph [0212] - paragraph [0244] * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 8 April 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4830

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | | Publication date |
|---|---|---|---|---|
| US 2021376995 A1 | 02-12-2021 | NONE | | |
| WO 2023184249 A1 | 05-10-2023 | CN | 118891847 A | 01-11-2024 |
| | | EP | 4500772 A1 | 05-02-2025 |
| | | WO | 2023184249 A1 | 05-10-2023 |

EPO FORM P0459

For more details about this annex : see Official Journal of the European Patent Office, No. 12/82